# EUROPEAN PATENT SPECIFICATION

(11) **EP 1 498 634 B1**
(45) Date of publication and mention of the grant of the patent: **14.01.2009**
(21) Application number: 04011824.2
(22) Date of filing: 18.05.2004
(51) Int. Cl.: F16D 65/46, F16D 55/02, F16D 55/40, F16D 65/14

(54) **Wet brake with a gap adjusting mechanism**
Nasslaufende Scheibenbremse mit einer Nachstellvorrichtung
Frein à disque humide avec un dispositif de rattrapage d'usure

(30) Priority: 09.07.2003 JP 2003194399
(43) Date of publication of application: 19.01.2005
(73) Proprietor: KABUSHIKI KAISHA TOYOTA JIDOSHOKKI, Kariya-shi, Aichi-ken (JP)
(72) Inventor: Masuda, Hideo, Kariya-shi Aichi-ken (JP)
(74) Representative: TBK-Patent

(56) References cited:
- CH-A- 347 685
- DE-U- 20 014 539
- US-A- 2 826 274
- US-A- 3 151 705

## Description

### BACKGROUND OF THE INVENTION

### Field of the Invention:

The present invention relates to a wet brake comprising a gap adjusting mechanism and, in particular, to a mechanism for adjusting a gap formed between a disc and a piston in a wet brake.

### Description of the Related Art:

Conventionally, in industrial vehicles such as forklifts, a wet brake has been used in which a disc adapted to rotate with a wheel is arranged between the pressure receiving surface of a brake housing and a piston, and in which the disc is pressurized by the piston to be subjected to a frictional force, thereby braking the wheel.

In such a wet brake, in order to prevent brake delay due to a change in the gap between the piston and the disc caused by wear or the like of the disc surface, there is provided a mechanism for adjusting this gap.

For example, JP 2001-193773 A discloses a mechanism in which an adjusting screw abuts the surface of the piston on the opposite side of the disc, and in which this adjusting screw is rotated to move the piston with respect to the disc, thereby adjusting the gap between the piston and the disc.

However, when applied to a wet brake in which a piston is arranged further inside a machine base than a disc, the above gap adjusting mechanism as disclosed in JP 2001-193773 A, in which the adjusting screw abuts the surface of the piston on the opposite side of the disc, has a problem in that the adjusting screw is arranged still further inside the machine base than the piston and therefore the adjusting screw has to be operated from the inner side of the machine base, resulting in a rather difficult operation.

Document DE 200 14 539 U1 discloses a wet brake with a gap adjusting mechanism comprising a positioning member and moving means.

### SUMMARY OF THE INVENTION

The present invention has been made with a view toward solving the above problem in the prior art. It is an object of the present invention to provide a gap adjusting mechanism in a wet brake which makes it possible to easily adjust a gap between a piston and a disc even when the piston is situated further inside a machine base than the disc.

According to the present invention, there is provided a wet brake comprising a gap adjusting mechanism for adjusting a gap formed between a disc and a piston of the wet brake, the mechanism including:
a positioning member arranged movably on the opposite side of the disc with respect to the piston and for being adapted to abut the piston to regulate the return position of the piston; and
moving means for moving the positioning member, one end portion of which is connected to the positioning member, and the other end portion of which is arranged on the same side as the disc with respect to the piston,
the other end portion of the moving means being operated to move the position of the positioning member with respect to the disc, thereby adjusting the gap formed between the disc and the piston.

In this gap adjusting mechanism, when the other end portion of the moving means is operated, the positioning member moves to thereby cause the return position of the piston to move. As a result, the gap between the piston and the disc is adjusted.

### BRIEF DESCRIPTION OF THE DRAWINGS

In the accompanying drawings:
Fig. 1 is a sectional view of a wet brake equipped with a gap adjusting mechanism according to an embodiment of the present invention;
Fig. 2 is a front view showing an adjusting plate in the gap adjusting mechanism according to the embodiment of the present invention; and
Fig. 3 is a perspective view showing how the adjusting plate is assembled in the gap adjusting mechanism according to the embodiment of the present invention.

### DETAILED DESCRIPTION OF THE PREFERRED EMBODIMENT

An embodiment of the present invention will now be described with reference to the accompanying drawings.

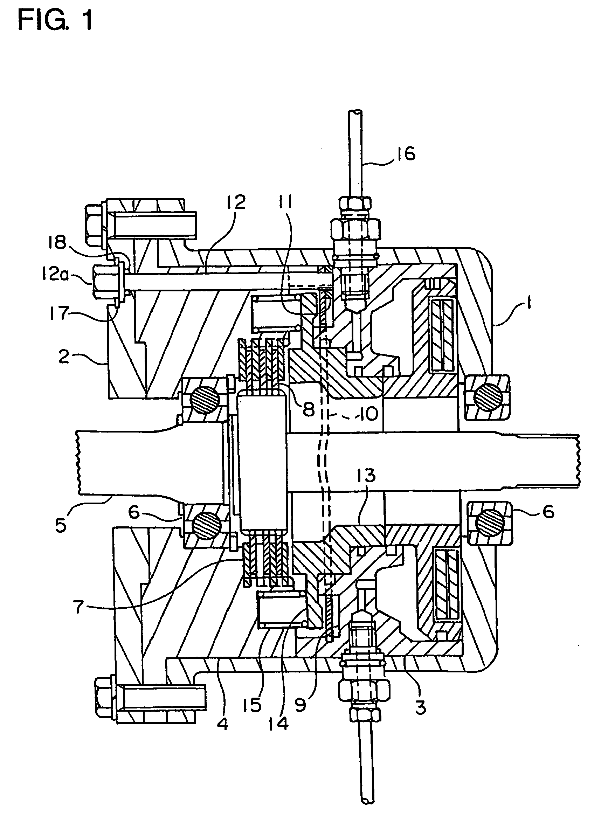

Fig. 1 is a sectional view of a wet brake equipped with a gap adjusting mechanism according to an embodiment of the present invention. The wet brake has a container member 1 substantially formed as a bottomed cylinder and adapted to be mounted to a machine base, and a cover 2 fixed to one end of the container member 1. Inside the container member 1, there are sequentially arranged a reaction force receiving member 3 and a pressure receiving member 4. The container member 1, the cover 2, the reaction force receiving member 3, and the pressure receiving member 4 constitutes the housing of the wet brake. The container member 1, the cover 2, the reaction force receiving member 3, and the pressure receiving member 4 have through-holes at their centers, and an axle 5 is passed through these through-holes to be rotatably supported by a pair of bearings 6.

The wet brake is mounted to the machine base such that the cover 2 faces the exterior of the machine base and that the bottom of the container member 1 faces the interior of the machine base, with a wheel being connected to the cover 2 side of the axle 5 and a motor to the container member 1 side thereof. Here, the outer surface side of the machine base will be referred to as a front side of the wet brake, and the inner side of the machine base as a rear side thereof.

In the rear surface of the pressure receiving member 4 opposed to the reaction force receiving member 3, there is formed an annular cutout in the periphery of the through-hole thereof, and, inside this cutout, there are mounted a plurality of annular pressurizing plates 7 at predetermined longitudinal intervals. At the outer periphery of the axle 5, there are installed a plurality of annular discs 8 arranged alternately with the plurality of pressurizing plates 7.

Further, in the front surface of the reaction force receiving member 3 opposed to the pressure receiving member 4, there is formed an annular groove 9, in which an annular adjusting plate 10 constituting a positioning member according to the present invention is arranged so as to be slidable in the axial direction, that is, the longitudinal direction. A nut 11 is arranged at the rear of a predetermined peripheral position of the adjusting plate 10. Further, from the front side of the cover 2, an adjusting screw 12 is passed through through-holes formed in the cover 2, the pressure receiving member 4, and the adjusting plate 10, and the tip end portion of the adjusting screw 12 is threadedly engaged with the nut 11.

Further, an annular piston 13 is inserted into the central through-hole of the reaction force receiving member 3 from the front side thereof, and is held so as to be slidable in the axial direction, that is, the longitudinal direction. This piston 13 has a protrusion 14 protruding sidewise with respect to its moving direction, that is, protruding radially, and the rear surface of the protrusion 14 is to abut the front surface of the adjusting plate 10. Further, the protrusion 14 is urged toward the rear of the container member 1 by a return spring 15 mounted in the pressure receiving member 4. Further, inside the reaction force receiving member 3, there is arranged an oil port 16, and an oil passage communicating with the oil port 16 is open in the vicinity of the rear surface of the piston 13.

Further, a retaining ring 17 is mounted to the cover 2, and the retaining ring 17 is engaged with a head portion 12a situated at the proximal end of the adjusting screw 12 to prevent the adjusting screw 12 from falling. Further, in order to prevent oil leakage, an O-ring 18 is arranged between the head portion 12a of the adjusting screw 12 and the cover 2.

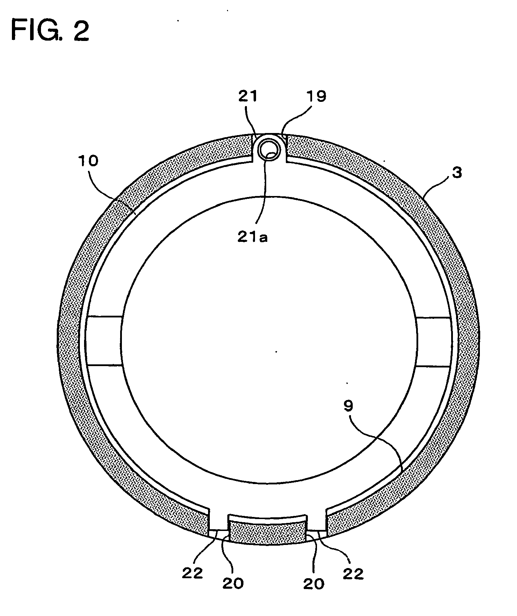

Further, as shown in Fig. 2, the reaction force receiving member 3 has one nut cutout 19 and two supporting cutouts 20 in the periphery of the groove 9, each of which is cut out in the longitudinal direction. The adjusting plate 10 has an upper protrusion 21 corresponding to the nut cutout 19, and two lower protrusions 22 corresponding to the two supporting cutouts 20. The upper protrusion 21 and the lower protrusions 22 of the adjusting plate 10 are respectively arranged in the nut cutout 19 and the supporting cutouts 20 of the reaction force receiving member 3, whereby the adjusting plate 10 is prohibited from rotating around its axis while slidable in the axial direction. Further, a through-hole 21a is formed at a center of the upper protrusion 21 of the adjusting plate 10. In Fig. 2, the piston 13 and the portion of the reaction force receiving member 3 situated inside the adjusting plate 10 are omitted.

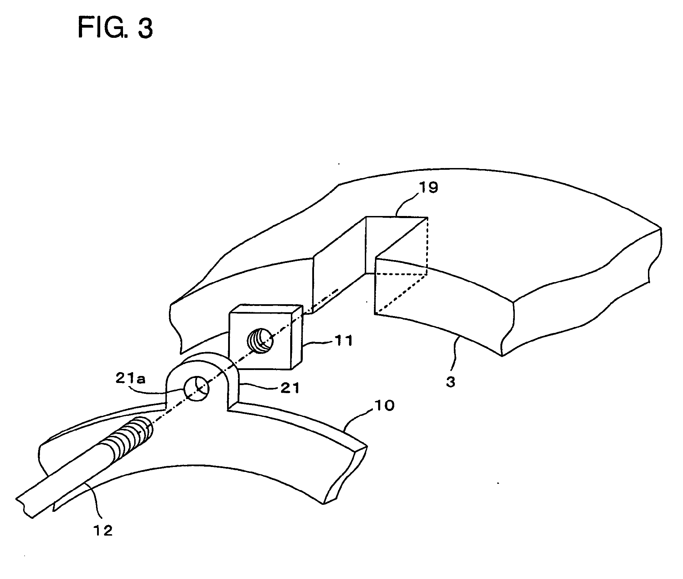

Further, as shown in Fig. 3, the nut 11 has a rectangular configuration, and the sectional configuration of the nut cutout 19 of the reaction force receiving member 3 is rectangular; by being fitted into the nut cutout 19, the nut 11 is prohibited from rotating around its axis while slidable in the axial direction, that is, the longitudinal direction. In contrast, the adjusting screw 12 is mounted so as to be rotatable around its axis. With the nut 11 and the upper protrusion 21 of the adjusting plate 10 fitted into the nut cutout 19 of the reaction force receiving member 3, the distal end portion of the adjusting screw 12 is inserted, from the front side, into the through-hole 21a of the upper protrusion 21 of the adjusting plate 10 to be threadedly engaged with the nut 11.

Next, the operation of the gap adjusting mechanism in a wet brake according to this embodiment will be described. In this wet brake, when pressure oil is poured into the oil passage from the oil port 16, the piston 13 moves toward the front side of the container member 1 against the urging force by the return spring 15, and the plurality of pressurizing plates 7 and the plurality of discs 8 are pressurized by the front surface of the piston 13 toward the pressure receiving member 4, with the result that a frictional force is generated between the pressurizing plates 7 and the discs 8 to brake the wheel.

When pressure oil is discharged from the oil port 16, the piston 13 moves toward the rear side of the container member 1 due to the urging force by the return spring 15 and separates from the plurality of pressurizing plates 7 and the plurality of discs 8, and when its protrusion 14 abuts the adjusting plate 10, the piston 13 is stopped. In this way, the return position of the piston 13 is regulated by the adjusting plate 10.

As stated above, the adjusting screw 12 is rotatable around its axis, whereas the nut 11 is prohibited from rotating around its axis while slidable in the axial direction, that is, the longitudinal direction. Thus, when the adjusting screw 12 is tightened with respect to the nut 11, the nut 11 slides in the nut cutout 19 so as to approach the head portion 12a of the adjusting screw 12, that is, slides forwards. In contrast, when the adjusting screw 12 is loosened with respect to the nut 11, the nut 11 slides in the nut cutout 19 so as to move away from the head portion 12a of the adjusting screw 12, that is, slides backwards. At this time, as the nut 11 moves, the position of the adjusting plate 10 with respect to the discs 8 also moves forwards or backwards, whereby the return position of the piston 13 is moved forwards or backwards. That is, by turning the adjusting screw 12, it is possible to adjust the gap formed between the disc 8 and the piston 13.

As described above, the gap adjusting mechanism in a wet brake according to this embodiment is equipped with the adjusting plate 10, the adjusting screw 12 and the nut 11. The adjusting plate 10 is movably arranged on the opposite side of the discs 8 with respect to the piston 13 and abuts the piston 13 to regulate the return position of the piston 13. One end of the adjusting screw 12 is connected to the adjusting plate 10 with the nut 11, and the other end thereof is arranged on the same side as the discs 8 with respect to the piston 13. The adjusting screw 12 and the nut 11 serve to move the adjusting plate 10. In this gap adjusting mechanism, by operating the head portion 12a of the adjusting screw 12 situated on the same side as the discs 8 with respect to the piston 13, that is, on the front side of the piston 13, it is possible to adjust the gap formed between the piston 13 and the disc 8, so that, even in a wet brake in which the piston 13 is situated on the rear side of the discs 8, that is, on the inner side of the machine base, it is possible to easily adjust the gap between the piston 13 and the disc 8 from the outer surface side of the machine base.

For example, when adjusting the gap formed between the disc 8 and the piston 13 at the time of assembly of the wet brake to the machine base, the adjusting screw 12 is first turned in the tightening direction with respect to the nut 11 to move the nut 11 and the adjusting plate 10 forwards, therefore the plurality of pressurizing plates 7 and the plurality of discs 8 are pressurized by the front surface of the piston 13. Then, the adjusting screw 12 is turned in the loosening direction, and, from the number of the rotation at that time and the sliding amount of the nut 11 upon one rotation of the adjusting screw 12, the size of the gap between the piston 13 and the disc 8 is computed, effecting adjustment such that the size of this gap attains an appropriate value, that is, an optimum braking can be achieved.

Further, at the time of maintenance or the like, the adjusting screw 12 is turned in the tightening direction, and measurement is performed on the requisite sliding amount of the nut 11 for attaining the state in which the plurality of pressurizing plates 7 and the plurality of discs 8 are pressurized by the front surface of the piston 13, whereby it is possible to detect the degree of wear of the discs 8 and the pressurizing plates 7. Thus, when the sliding amount has changedby a predetermined value ormore as compared with the initial value, it can be determined that the plurality of discs 8 and the plurality of pressurizing plates 7 have reached the wear limit to replace the discs 8 and the pressurizing plates 7 with new ones.

While in the above-described embodiment the nut 11 is fitted into the nut cutout 19 of the reaction force receiving member 3, it is also possible, instead, to fix the nut 11 to the adjusting plate 10 by welding or the like. In this case, the nut 11 may be fixed to the front or the rear side of the adjusting plate 10.

Further, when the plurality of sets of the adjusting screws 12 and the nuts 11, for example, three sets of them are arranged in the circumferential direction of the adjusting plate 10, it is possible to move the entire adjusting plate 10 in the axial direction to adjust the gap between the piston 13 and the disc 8.

Further, while in the above embodiment the nut 11 has a rectangular configuration, and the sectional configuration of the nut cutout 19 of the reaction force receiving member 3 is rectangular, there are no particular limitations regarding the configuration of the nut and the sectional configuration of the nut cutout as long as the nut is prohibited from rotating around its axis and is slidable in the axial direction by being fitted into the nut cutout.

Further, the two supporting cutouts 20 of the reaction force receiving member 3 may be cut out so as to extend over the entire longitudinal direction or halfway therethrough, respectively.

Further, the configuration of the adjusting plate 10 is not limited to the annular one; any configuration will do as long as it has a portion abutting the piston 13 to regulate the return position of the piston 13.

The gap adjusting mechanism of the present invention is applicable not only to a wet brake but also to a wet type clutch.

According to the present invention, as described above, there is provided a wet brake comprising a gap adjusting mechanism for adjusting a gap formed between a disc and a piston of the wet brake, the mechanism including: a positioning member arranged movably on the opposite side as the disc with respect to the piston and abutting the piston to regulate the return position of the piston; and moving means for moving the positioning member, one end portion of which being connected to the positioning member, and the other end portion of which being arranged on the same side as the disc with respect to the piston, in which the other end portion of the moving means is operated to move the position of the positioning member with respect to the disc, thereby adjusting the gap formed between the disc and the piston.

Accordingly, the gap formed between the disc and the piston can be easily adjusted even when the piston is situated further inside the machine base than the disc. The gap can be adjusted from the outer side of the machine base even when the piston is arranged further inside the machine base than the disc, therefore the layout of the disc and the piston can be selected more freely.

An adjusting screw (12) is rotatable around its axis, whereas a nut (11) is prohibited from rotating around its axis and slidable in the axial direction, that is, in the longitudinal direction, so that, when the adjusting screw (12) is tightened, the nut (11) slides toward the head portion (12a) of the adjusting screw (12), whereas, when the adjusting screw (12) is loosened, it slides away from the head portion (12a) of the adjusting screw (12). At this time, as the nut (11) moves, the position of an adjusting plate (10) with respect to a disc (8) also moves, whereby the gap formed between the disc (8) and the piston (13) is adjusted.

## Claims

1. A wet brake comprising a gap adjusting mechanism for adjusting a gap formed between a disc (8) and a piston (13) of the wet brake, **characterised in that** the mechanism comprises:
a positioning member (10) arranged movably on the opposite side of the disc (8) with respect to the piston (13) for being adapted to abut the piston (13) to regulate the return position of the piston (13); and
moving means (11, 12) for moving the positioning member (10), one end portion (11) of which is connected to the positioning member (10), and the other end portion (12a) of which is arranged on the same side as the disc (8) with respect to the piston (13),
the other end portion (12a) of the moving means (11, 12) being operated to move the position of the positioning member (10) with respect to the disc (8), thereby adjusting the gap formed between the disc (8) and the piston (13).

2. A wet brake comprising a gap adjusting mechanism according to Claim 1, wherein the piston (13) is arranged further inside a machine base to which the wet brake is mounted than the disc (8), the positioning member (10) being arranged still further inside the machine base than the piston (13), the other end portion of the moving means (11, 12) being situated on the outer surface side of the machine base.

3. A wet brake comprising a gap adjusting mechanism according to one of Claims 1 and 2, wherein the moving means (11, 12) is arranged at each of plural positions of the positioning means (10).

4. A wet brake comprising a gap adjusting mechanism in a wet brake according to one of Claims 1 to 3, wherein the moving means (11, 12) comprises an adjusting screw (12) mounted so as to be rotatable around its axis and a nut (11) engaged with the positioning member (10) with being prohibited from rotating around its axis, the nut (11) being threadedly engaged with the tip end portion of the adjusting screw (12), the position of the positioning member (10) with respect to the disc (8) being moved by turning the adjusting screw (12) with respect to the nut (11).

5. A wet brake comprising a gap adjusting mechanism according to Claim 4, wherein a nut cutout (19) corresponding to the nut (11) is formed in a housing (3) of the wet brake, the nut (11) being fitted into the nut cutout (19) on the opposite side of the piston (13) with respect to the positioning member (10) so as to be slidable in the axial direction and prohibited from rotating around its axis.

6. A wet brake comprising a gap adjusting mechanism according to Claim 5, wherein the nut (11) has a rectangular configuration, the nut cutout (19) having a rectangular sectional configuration in conformity with the configuration of the nut (11).

7. A wet brake comprising a gap adjusting mechanism according to one of Claims 5 and 6, wherein the positioning member (10) has a protrusion (21) slidably arranged in the nut cutout (19), a through-hole (21a) through which the adjusting screw (12) is to be passed being formed substantially at the center of the protrusion (21).

8. A wet brake comprising a gap adjusting mechanism according to Claim 4, wherein the nut (11) is fixed to the positioning member (10).

9. A wet brake comprising a gap adjusting mechanism according to one of Claims 4 to 8, wherein the housing (1, 2, 3, 4) of the wet brake has a container member (1) mounted to the machine base and formed substantially as a bottomed cylinder, a cover (2) fixed to one end portion of the container member (1), and a reaction force receiving member (3) and a pressure receiving member (4) both of which are arranged in the container member (1), the tip end portion of the adjusting screw (12) being passed through the cover (2) to be threadedly engaged with the nut (11), a retaining ring (17) to be engaged with a head portion (12a) of the adjusting screw (12) being mounted to the cover (2).

10. A wet brake comprising a gap adjusting mechanism according to Claim 9, wherein an O-ring (18) is arranged between the cover (2) and the head portion (12a) of the adjusting screw (12).

11. A wet brake comprising a gap adjusting mechanism according to one of Claims 1 to 10, wherein the piston (13) has a protrusion (14) protruding sidewise with respect to the moving direction thereof, the positioning member (10) abuttig the protrusion (14).

## Patentansprüche

1. Nassbremse mit einem Spalteinstellmechanismus zum Einstellen eines Spalts, der zwischen einer Scheibe (8) und einem Kolben (13) der Nassbremse ausgebildet ist,
**dadurch gekennzeichnet, dass**
der Mechanismus Folgendes aufweist:
ein Positionierungsbauteil (10), das auf der zur Scheibe (8) entgegengesetzten Seite mit Hinblick auf den Kolben (13) bewegbar angeordnet ist, um angepasst zu werden, um an den Kolben (13) anzuliegen, um die Rückstellposition des Kolbens (13) zu regulieren; und
eine Bewegungseinrichtung (11, 12) zum Bewegen des Positionierungsbauteils (10), wobei ein Endabschnitt (11) von dieser mit dem Positionierungsbauteil (10) verbunden ist und der andere Endabschnitt (12a) von dieser auf der gleichen Seite wie die Scheibe (8) mit Hinblick auf den Kolben (13) angeordnet ist,
wobei der andere Endabschnitt (12a) der Bewegungseinrichtung (11, 12) betätigt wird, um die Position des Positionierungsbauteils (10) mit Hinblick auf die Scheibe (8) zu bewegen, wodurch der zwischen der Scheibe (8) und dem Kolben (13) ausgebildete Spalt eingestellt wird.

2. Nassbremse mit einem Spalteinstellmechanismus nach Anspruch 1, wobei der Kolben (13) weiter innerhalb einer Maschinenbasis, an der die Nassbremse montiert ist, als die Scheibe (8) angeordnet ist, wobei das Positionierungsbauteil (10) noch weiter innerhalb der Maschinenbasis als der Kolben (13) angeordnet wird, wobei sich der andere Endabschnitt der Bewegungseinrichtung (11, 12) an der Außenflächenseite der Maschinenbasis befindet.

3. Nassbremse mit einem Spalteinstellmechanismus nach einem der Ansprüche 1 und 2, wobei die Bewegungseinrichtung (11, 12) an jeder von mehreren Positionen der Positionierungseinrichtung (10) angeordnet ist.

4. Nassbremse mit einem Spalteinstellmechanismus nach einem der Ansprüche 1 bis 3, wobei die Bewegungseinrichtung (11, 12) eine Einstellschraube (12), die montiert ist, um um ihre Achse herum drehbar zu sein, und eine Mutter (11) aufweist, die mit dem Positionierungsbauteil (10) in Eingriff steht, wobei sie an einem Drehen um ihre Achse gehindert wird, wobei die Mutter (11) mit einem Gewinde mit dem vorderen Endabschnitt der Einstellschraube (12) in Eingriff steht,
wobei die Position des Positionierungsbauteils (10) mit Hinblick auf die Scheibe (8) durch ein Drehen der Einstellschraube (12) mit Hinblick auf die Mutter (11) bewegt wird.

5. Nassbremse mit einem Spalteinstellmechanismus nach Anspruch 4, wobei ein Mutternausschnitt (19), der zu der Mutter (11) korrespondiert, in einem Gehäuse (3) der Nassbremse ausgebildet ist, wobei die Mutter (11) in den Mutternausschnitt (19) auf der zum Kolben (13) entgegengesetzten Seite mit Hinblick auf das Positionierungsbauteil (10) eingepasst ist, um in der axialen Richtung gleitfähig zu sein und um an einem Drehen um dessen Achse gehindert ist.

6. Nassbremse mit einem Spalteinstellmechanismus nach Anspruch 5, wobei die Mutter (11) eine rechtwinklige Gestalt hat, wobei der Mutternausschnitt (19) in Übereinstimmung mit der Gestalt der Mutter (11) eine rechtwinklige Querschnittsgestalt hat.

7. Nassbremse mit einem Spalteinstellmechanismus nach einem der Ansprüche 5 und 6, wobei das Positionierungsbauteil (10) einen Vorsprung (21) hat, der in dem Mutternausschnitt (19) gleitfähig angeordnet ist, wobei ein Durchgangsloch (21a), durch das die Einstellschraube (12) hindurchzuführen ist, im Wesentlichen in der Mitte des Vorsprungs (21) ausgebildet ist.

8. Nassbremse mit einem Spalteinstellmechanismus nach Anspruch 4, wobei die Mutter (11) an dem Positionierungsbauteil (10) befestigt ist.

9. Nassbremse mit einem Spalteinstellmechanismus nach einem der Ansprüche 4 bis 8, wobei das Gehäuse (1, 2, 3, 4) der Nassbremse ein Behälterbauteil (1), das an die Maschinenbasis montiert ist und im Wesentlichen als ein am Boden geschlossener Zylinder ausgebildet ist, eine Abdeckung (2), die an einem Endabschnitt des Behälterbauteils (1) befestigt ist, und ein Reaktionskraftaufnahmebauteil (3) und ein Druckaufnahmebauteil (4) hat, die beide in dem Behälterbauteil (1) angeordnet sind, wobei der vordere Endabschnitt der Einstellschraube (12) durch die Abdeckung (2) hindurchführt, um über ein Gewinde mit der Mutter (11) in Eingriff zu stehen, wobei ein Haltering (17) mit einem Kopfabschnitt (12a) der Einstellschraube (12) in Eingriff stehen soll, welche an der Abdeckung (2) montiert ist.

10. Nassbremse mit einem Spalteinstellmechanismus nach Anspruch 9, wobei ein O-Ring (18) zwischen der Abdeckung (2) und dem Kopfabschnitt (12a) der Einstellschraube (12) angeordnet ist.

11. Nassbremse mit einem Spalteinstellmechanismus nach einem der Ansprüche 1 bis 10, wobei der Kolben (13) einen Vorsprung (14) hat, der seitlich mit Hinblick auf seine Bewegungsrichtung vorragt, wobei das Positionierungsbauteil (10) an den Vorsprung (14) anliegt.

## Revendications

1. Frein humide comprenant un mécanisme de réglage d'écartement destiné à régler un écartement formé entre un disque (8) et un piston (13) du frein humide, **caractérisé en ce que** le mécanisme comprend :
un élément de positionnement (10) agencé pour être mobile sur le côté opposé du disque (8) par rapport au piston (13) afin d'être adapté pour buter contre le piston (13) afin de réguler la position de retour du piston (13) ; et
des moyens de déplacement (11, 12) permettant de déplacer l'élément de positionnement (10), dont une partie d'extrémité (11) est raccordée à l'élément de positionnement (10), et l'autre partie d'extrémité (12a) est agencée sur le même côté que le disque (8) par rapport au piston (13),
l'autre partie d'extrémité (12a) des moyens de déplacement (11, 12) étant actionnée pour déplacer la position de l'élément de positionnement (10) par rapport au disque (8), en réglant ainsi l'écartement formé entre le disque (8) et le piston (13).

2. Frein humide comprenant un mécanisme de réglage d'écartement selon la revendication 1, dans lequel le piston (13) est agencé plus loin à l'intérieur d'un châssis de machine sur lequel le frein humide est monté que le disque (8), l'élément de positionnement (10) étant agencé encore plus loin à l'intérieur du châssis de machine que le piston (13), l'autre partie d'extrémité des moyens de déplacement (11, 12) étant située sur le côté de la surface extérieure du châssis de machine.

3. Frein humide comprenant un mécanisme de réglage d'écartement selon l'une des revendications 1 et 2, dans lequel les moyens de déplacement (11, 12) sont agencés à chacune des différentes positions du moyen de positionnement (10).

4. Frein humide comprenant un mécanisme de réglage d'écartement dans un frein humide selon l'une des revendications 1 à 3, dans lequel les moyens de déplacement (11, 12) comprennent une vis de réglage (12) montée de façon à pouvoir tourner autour de son axe et un écrou (11) engagé sur l'élément de positionnement (10) à qui il est interdit de tourner autour de son axe, l'écrou (11) étant engagé par filetage sur la portion d'extrémité de pointe de la vis de réglage (12), la position de l'élément de positionnement (10) par rapport au disque (8) étant déplacée en faisant tourner la vis de réglage (12) par rapport à l'écrou (11).

5. Frein humide comprenant un mécanisme de réglage d'écartement selon la revendication 4, dans lequel une découpe pour écrou (19) correspondant à l'écrou (11) est formée dans un boîtier (3) du frein humide, l'écrou (11) étant installé dans la découpe pour écrou (19) sur le côté opposé du piston (13) par rapport à l'élément de positionnement (10), de façon à pouvoir coulisser dans la direction axiale et étant empêché de tourner autour de son axe.

6. Frein humide comprenant un mécanisme de réglage d'écartement selon la revendication 5, dans lequel l'écrou (11) a une configuration rectangulaire, la découpe pour écrou (19) ayant une configuration de coupe rectangulaire conforme à la configuration de l'écrou (11).

7. Frein humide comprenant un mécanisme de réglage d'écartement selon l'une des revendications 5 et 6, dans lequel l'élément de positionnement (10) présente une protubérance (21) qui est agencée pour coulisser dans la découpe d'écrou (19), un trou traversant (21a), à travers lequel la vis de réglage (12) doit passer, étant formé sensiblement au centre de la protubérance (21).

8. Frein humide comprenant un mécanisme de réglage d'écartement selon la revendication 4, dans lequel l'écrou (11) est fixé sur l'élément de positionnement (10).

9. Frein humide comprenant un mécanisme de réglage d'écartement selon l'une des revendications 4 à 8, dans lequel le boîtier (1, 2, 3, 4) du frein humide présente un élément de carter (1) monté sur le socle de machine et formé sensiblement comme un cylindre muni d'un fond, un couvercle (2) fixé sur une partie d'extrémité de l'élément de carter (1), et un élément de réception de la force de réaction (3) et un élément de réception de la pression (4) qui sont tous les deux agencés dans l'élément de carter (1), la partie d'extrémité de pointe de la vis de réglage (12) étant passée à travers le couvercle (2) pour s'engager par filetage sur l'écrou (11), une bague de retenue (17) devant s'engager sur une partie de tête (12a) de la vis de réglage (12) étant montée sur le couvercle (2).

10. Frein humide comprenant un mécanisme de réglage d'écartement selon la revendication 9, dans lequel un joint torique (18) est agencé entre le couvercle (2) et la partie de tête (12a) de la vis de réglage (12).

11. Frein humide comprenant un mécanisme de réglage d'écartement selon l'une des revendications 1 à 10, dans lequel le piston (13) présente une protubérance (14) qui fait saillie sur le côté par rapport à la direction de déplacement de celui-ci, l'élément de positionnement (10) butant contre la protubérance (14).
